# EUROPÄISCHE PATENTSCHRIFT

(11) **EP 3 704 040 B1**
(45) Veröffentlichungstag und Bekanntmachung des Hinweises auf die Patenterteilung: **13.08.2025**
(21) Anmeldenummer: 18795586.9
(22) Anmeldetag: 30.10.2018
(51) Int. Cl.: B65G 1/04, B66F 9/07, B66F 9/14

(54) **REGALSYSTEM MIT SHUTTLEFAHRZEUG**
SHELVING SYSTEM HAVING A SHUTTLE VEHICLE
SYSTÈME DE RAYONNAGES COMPRENANT UN VÉHICULE NAVETTE

(30) Priorität: 30.10.2017 DE 102017219432
(43) Veröffentlichungstag der Anmeldung: 09.09.2020
(73) Patentinhaber: FB Industry Automation GmbH, 8200 Albersdorf-Prebuch (AT)
(72) Erfinder: FRISSENBICHLER, Werner, 8200 Albersdorf-Prebuch (AT)
(74) Vertreter: Hoffmann Eitle
(86) Internationale Anmeldenummer: PCT/EP2018/079653
(87) Internationale Veröffentlichungsnummer: WO 2019/086420

(56) Entgegenhaltungen:
- WO-A2-2015/038999
- AT-A1- 511 140
- US-A1- 2002 070 099
- US-A1- 2014 277 689

## Beschreibung

Die vorliegende Erfindung betrifft einen Shuttlefahrzeug und ein Regalsystem mit Shuttlefahrzeug, und insbesondere ein Regalsystem mit Shuttlefahrzeug bei dem eine Teleskopunterfahrtechnik zum Ein- und Auslagern schwerer Lasten zum Einsatz kommt.

In bestehenden Lagersystemen bilden Flurförderfahrzeuge und Regalbediengeräte die Grundlage für das Bestücken und für das Auslagern von Artikeln aus Lagerplätzen eines Lagersystems.

Die Entgegenhaltung WO 2015/038999 A2 beschreibt ein automatisiertes Lager- und Bereitstellungssystem, in dem ein autonomes Transportfahrzeug mit einem Rahmen, der eine Nutzlastfläche bildet, und Teleskoparmen, die beweglich am Rahmen montiert sind, wobei jeder Teleskoparm so konfiguriert ist, dass er relativ zum Rahmen entlang einer Ausziehachse aus- und eingefahren werden kann, um Transfer von mindestens einer Aufnahmefläche zum und vom Nutzlastbereich und Querbewegung relativ zum Rahmen in mindestens einer Richtung, d.h. in einem Winkel zur Verlängerungsachse, und mindestens eine Lasche, die sich von jedem Teleskoparm aus erstreckt, wobei die mindestens eine Lasche in einer Richtung verläuft quer zur Ausfahr- und Einfahrrichtung, und die mindestens eine Lasche an einem der Teleskoparme steht der mindestens eine Lasche an einem anderen der Teleskoparme. Insbesondere offenbart WO 2015/038999 A2 ein Shuttlefahrzeug nach dem Oberbegriff des Anspruchs 1.

Jedoch benötigen derartige Flurförderfahrzeuge und Regalbediengeräte regelmäßig viel Platz und sind im Hinblick auf die Einlagerungstiefe beschränkt.

Zudem benötigen derartige Flurförderfahrzeuge regelmäßig zusätzlich Platz zum Manövrieren, so dass deren Einsatz zu einer Reduktion der für die Lagerung zur Verfügung stehenden Kapazitäten führt.

Demnach besteht das technische Problem der vorliegenden Erfindung in der Erhöhung der Flexibilität und Durchsatzes eines Lagersystems.

Gemäß der vorliegenden Erfindung wird dieses technische Problem gelöst mit einem Shuttlefahrzeug gemäß Patentanspruch 1.

Das erfindungsgemäße Shuttlefahrzeug lässt sich in dem Regalsystem zum Transportieren von Lagergütern bewegen. Das Shuttlefahrzeug enthält ein Fahrgestell mit daran montierten Rädern, um das Shuttlefahrzeug entlang von Fahrschienen des Regalsystems zu bewegen. Weiterhin enthält das Shuttlefahrzeug mindestens eine Teleskopfahrschiene, die an dem Fahrgestell so montiert ist, dass ihre Fahrtrichtung gegenüber derjenigen der Fahrschienen des Regalsystems um einen vorgegebenen Winkel größer Null abweicht, z.B., einem Winkel von im Wesentlichen 90°.

Zudem enthält das Shuttlefahrzeug ein Teleskopsystem für jede Teleskopfahrschiene mit hieran montierten Teleskoprädern, um das Teleskopsystem entlang der zugehörigen Teleskopfahrschiene relativ zu dem Fahrgestell in einer Ebene ein- und auszufahren. Darüber hinaus enthält das Teleskopsystem des Shuttlefahrzeug nach der Erfindung ein Basisträgerelement, an dem die Räder mittels Radaufhängungen befestigt sind, sowie ein Hubsystem, um eine Ladefläche des Teleskopsystems höhenverstellbar an dem Basisträgersystem zu befestigen.

Weiterhin wird das technische Problem der vorliegenden Erfindung gelöst durch ein Regalsystem gemäß Patentanspruch 10.

Das Regalsystem weist mindestens eine Lagerebene auf, in der eine Vielzahl von Lagerplätzen, Stellplätzen bzw. Regalplätzen rechtwinklig angeordnet sind. Das Regalsystem weist zudem mindestens eine zwischen gegenüberliegenden Außenseiten des Regalsystems verlaufende Shuttlepassage pro Lagerebene auf. Die Shuttlepassage verläuft geradlinig entlang von Lagerplätzen der Lagerebene. Zudem weist das Regalsystem mindestens ein erfindungsgemäßes Shuttlefahrzeug auf, das sich in mindestens einer Shuttlepassage des Lagersystems zum Ein- und Auslagern von Lagergütern bewegen lässt.

Weitere vorteilhafte Ausführungen der vorliegenden Erfindung sind in den abhängigen Patentansprüchen angegeben.

Im Folgenden werden bevorzugte Ausführungsformen der vorliegenden Erfindung unter Bezug auf die Zeichnungen beschrieben; es zeigen
- Fig. 1: eine Draufsicht auf das erfindungsgemäße Shuttlefahrzeug mit ein- bzw. ausgefahrenem Teleskopsystem;
- Fig. 2: eine Perspektivansicht des erfindungsgemäßen Teleskopsystems;
- Fig. 3: eine Perspektivansicht des erfindungsgemäßen Shuttlefahrzeugs mit ausgefahrenem Teleskopsystem bei mehrfach tiefer Lagerung von Transportbehältern;
- Fig. 4: den Einsatz des erfindungsgemäßen Shuttlefahrzeugs in einem erfindungsgemäßem Lagersystem;
- Fig. 5: eine Draufsicht auf ein erfindungsgemäßes Lagersystem;
- Fig. 6: eine Perspektivansicht des erfindungsgemäßen Lagersystems; und
- Fig. 7: eine Perspektivansicht des erfindungsgemäßen Lagersystems mit Kommissionier-Durchlaufregalen.

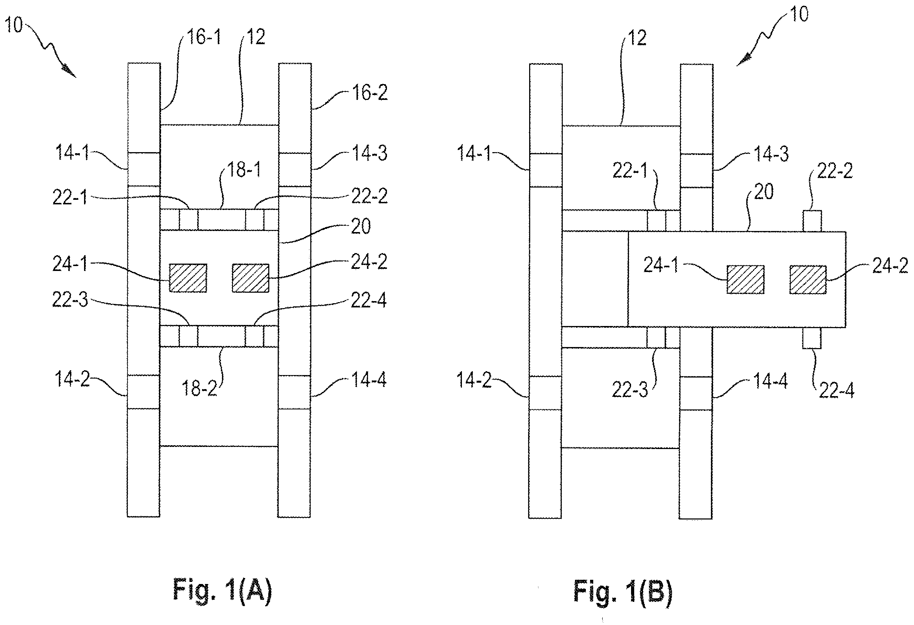

Fig. 1 zeigt eine Draufsicht auf ein erfindungsgemäßes Shuttlesystem 10 mit eingefahrenem Teleskopsystem 12, Fig. 1(A), und mit ausgefahrenem Teleskopsystem 12, Fig. 1(B).

Wie in Fig. 1 gezeigt, dient das Shuttlefahrzeug 10 zum Transportieren von Lagergütern in einem Regalsystem. Es enthält ein Fahrgestell 12 mit hieran montierten Rädern 14-1, 14-2, 14-3, 14-4, um das Shuttlefahrzeug entlang von Fahrschienen 16-1, 16-2 des Regalsystems zu bewegen.

Wie in Fig. 1(A) und in Fig. 1(B) gezeigt, enthält das Shuttlefahrzeug 10 mindestens eine Teleskopfahrschiene 18-1, 18-2, die an dem Fahrgestell 12 so montiert ist, dass ihre Fahrrichtung gegenüber derjenigen der Fahrschiene 16-1, 16-2 des Regalsystems um einen vorgegebenen Winkel größer Null abweicht. Beispielsweise weist dieser Winkel einen Wert von im Wesentlichen 90° auf, so dass sich die Fahrrichtungen der Fahrschienen 16-1, 16-2 zu den neiden Seiten des Shuttlefahrzeugs 10 erstrecken. Gemäß der vorliegenden Erfindung ist es jedoch auch möglich, einen kleineren oder größeren Wert für den Winkel zu wählen, um eine gegenüber den Fahrschienen des Regalsystems schräge Ausfahrrichtung zu realisieren.

Wie in Fig. 1(A) und Fig. 1(B) gezeigt, weist das Shuttlefahrzeug 10 zudem ein Teleskopsystem 20 mit hieran montierten Teleskoprädern 22-1, 22-2, 22-3, 22-4 auf, um das Teleskopsystem 20 entlang der zugehörigen Teleskopfahrschiene oder den zugehörigen Fahrzeugschienen 18-1, 18-2 relativ zu dem Fahrgestell 12 in einer Ebene ein- und auszufahren.

Gemäß der vorliegenden Erfindung ist das Teleskopsystem 20 einfachwirkend aufgebaut. Dies bedeutet, dass der Teleskoparm eingliedrig ist und somit in einer Ebene bewegt werden kann. Dies führt zu einem generell sehr niedrigen Aufbau für das Shuttlefahrzeug, was für die Effizienzsteigerung in dem Regalsystem von besonderer Bedeutung ist.

Ferner wird im Rahmen der vorliegenden Erfindung das Shuttlefahrzeug 10 als Schwerlast-Shuttlefahrzeug ausgebildet.

Bei der Schwerlastvariante läuft das aus- und einfahrende Teleskopsystem 20 auf zugeordneten Fahrschienen, die in dem Lagersystem zum Aufnehmen der durch die Last des Teleskopsystems 20 wirkenden Kräfte vorgesehen sind.

Für das Verfahren des Teleskopsystems 20 kann an dem Shuttlefahrzeug 10 ein zugeordneter Antrieb vorgesehen sein, beispielsweise ein Kettenantrieb. Alternativ kann das Teleskopsystem mit einem eigenen Antrieb, beispielsweise einen Elektromotor, versehen sein, wodurch sich die Flexibilität erhöht, weil in Hinblick auf die Einfahrtiefe in das Regalsystem keine Einschränkungen bestehen.

Mittels der Kombination des Fahrgestells 12 und des Teleskopsystems 20 ist erfindungsgemäß die Möglichkeit eröffnet, eine mehrfachtiefe Lagerung in beliebiger Variabilität durchzuführen.

Hierbei kann je nach Teilung in Bezug auf die Tiefe des Regals mehrfachtief gelagert werden. Somit ergibt sich, sofern die durch das Teleskopsystem bedienbare Länge gleich der Lagertiefe ist, eine einfachtiefe Lagerung. Entsprechend ergibt sich, sofern die durch das Teleskopsystem bedienbare Länge gleich der zweifachtiefen Lagertiefe ist, eine zweifachtiefe Lagerung, usw.

Wie in den Fig. 1(A) und 1(B) gezeigt, können beispielsweise zwei Lagegüter 24-1, 24-2 bei einer zweifachtiefen Lagerung eingesetzt werden. Hierbei bestücken Shuttlefahrzeuge mittels des Teleskopsystems 20 das Lagersystem oder entnehmen mittels des Teleskopsystems 20 Lagerbehälter.

Bei der Schwerlastvariante lagert das Teleskopsystem 20 das Ladegut mittels Teleskopunterfahrtechnik ein bzw. aus.

Bei der Schwerlastvariante laufen die Räder 22-1, 22-2, 22-3, 22-4 des Teleskopsystems 20 in Fahrschienen des Regalsystems, um große Last aufnehmen zu können.

Bei der Schwerlastvariante kann das Fahrzeugshuttle 10 ein Gewicht von ca. 15t aufweisen und bis zu 6 Meter tief einlagern. Es können schmale und breite Produkte wie beispielsweise Spanplattenstapel etc. mehrfachtief eingelagert werden. Bei einfachtiefer Technik beispielsweise mit bis zu 5,7m Länge und 2,1m Breite und 0,9m Höhe mit ca. 15t Gewicht, bei zweifachtiefer Lagerung beispielsweise mit 2,8m Länge und 2,1m Breite und 0,9m Höhe mit jeweils ca. 4,5t bis 7,5t Gewicht, und bei vierfachtiefer Einlagerung beispielsweise zweifachtief und zweifach nebeneinander mit 2,8m Länge und 1,1m Breite. Im letztgenannten Fall können zwei Pakete nebeneinander und zwei hintereinander eingelagert werden und somit haben vier Stück Lagergut je Regalbox Platz.

Ferner können gemäß der erfindungsgemäßen Shuttletechnologie dynamische Regallager- und Kommissionieranwendungen je nach Branche für schwere Produkte bis zu 15t gehandhabt werden, wobei mittels eines Teleskop 20 untergefahren, gehoben und ausgelagert bzw. eingelagert wird. Es können kürzere Pakete hintereinander eingelagert werden. Der Zugriff ist in der Tiefe variabel, sodass die erforderliche Tiefe ein- und ausgelagert wird. Falls z.B. von drei Pakete lediglich das dritte benötigt wird, können die Pakete 1 und 2 auf der gegenüberliegenden Seite wieder eingelagert werden.

Zudem ist bei der erfindungsgemäßen Shuttletechnik der Durchsatz durch eine Vielzahl an Shuttlefahrzeugen höher als bei herkömmlichen Regalfahrzeugen, da ein höherer Durchsatz mittels Parallelarbeit ermöglicht ist. Wie nachfolgend noch eingehender erläutert, können pro Ebene eines Regalsystems mehrere Shuttlefahrzeuge eingesetzt werden, die mittels Shuttleumsetzer zwischen einzelnen Ebenen des Regalsystems vertikal umsetzbar sind. Die Umsetzer können am Regalsystem einseitig oder zweiseitig angeordnet sein. Mit den Umsetzern werden die Shuttlefahrzeuge mit oder ohne Zuladung umgesetzt. Alternativ können auch nur Produkte umgesetzt werden; dann wäre ein Umsetzer für Shuttles an einer Stirnseite des Regalsystems und ein Umsetzer nur für Produkte an der anderen Seite oder entlang des Regals eine Realisierungsmöglichkeit.

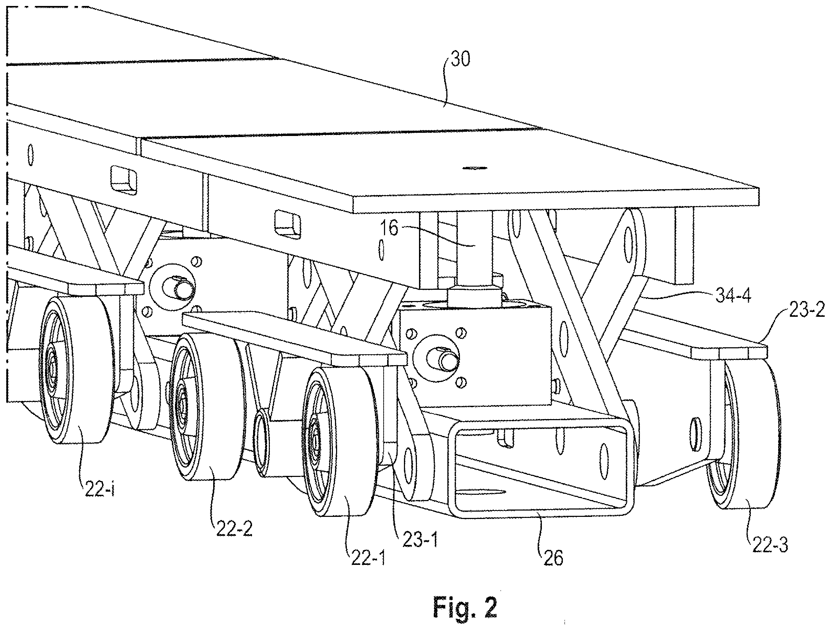

Die Fig. 2 zeigt eine Perspektivansicht des erfindungsgemäßen Teleskopsystems 20.

Wie in Fig. 2 gezeigt, enthält das Teleskopsystem 20 ein Basisträgerelement 26, an dem die Räder 22-1, 22-2, ... mittels Radaufhängungen 28-1, 28-2,... befestigt sind. Zudem weist das Teleskopsystem 20 eine an dem Basisträgerelement 26 befestigte Ladefläche 30 auf. Bevorzugt sind die Radaufhängungen 28-1, 28-2, ... so ausgebildet, dass sich die Räder 22-1, 22-2, ... entlang der Fortbewegungsrichtung des Teleskopsystems 20 verschwenken lassen.

Wie in Fig. 2 gezeigt, weist das Teleskopsystem 20 zudem ein Hubsystem auf, mittels dem die Ladefläche 30 höhenverstellbar an dem Basisträgersystem 26 befestigt wird. Das Hubsystem wird gebildet durch mehrere an dem Basisträgerelement 26 und an der Ladefläche 30 befestigte X-Verstrebungen und dazu mehrere Hubsäulen 36 zum Positionieren der Ladefläche 30 relativ zu dem Basisträgerelement 26. Die Funktionsweise des Hubsystems kann mechanisch, elektrisch und/oder hydraulisch ausgebildet sein.

Zudem ist die Ausbildung des Hubsystems nicht auf eine X-Verstrebung beschränkt. Optionen sind auch Linear-Hubelemente, Excenter-Hubelemente, oder Kurbelantriebe.

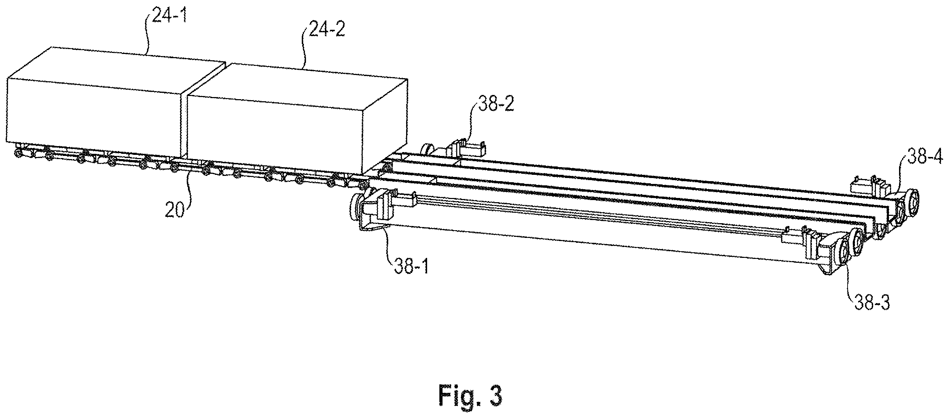

Die Fig. 3 zeigt eine Perspektivansicht des erfindungsgemäßen Shuttlefahrzeugs 10 mit zweifach tiefer Lagerung bei ausgefahrenem Teleskopsystem 20.

Wie in Fig. 3 gezeigt, lassen sich Lagergüter in Ladungsträgern 24-1, 24-2 mit vorgegebener Länge, Höhe und Breite befördern. Die Ladefläche 30 des Teleskopsystems 20 weist hierbei bei der einfachtiefen Einlagerung eine Länge auf, die ein vielfaches der Länge oder Breite der Ladungsträger ist, insbesondere ein einfaches der Länge oder Breite der Ladungsträger 24-1, 24-2.

Wie in Fig. 3 gezeigt, können bei der Schwerlastvariante die Teleskopräder 22-1, 22-2, ... des Teleskopsystems 20 in korrespondierenden Teleskopfahrschienen des Lagersystems aufliegen.

Erfindungsgemäß erfolgt das Ein- und Auslagern mittels des Teleskopsystems 20 eines Shuttlefahrzeugs 10 in einem angehobenen Zustand. Anschließend werden Behälter 24-1, 24-2 auf einem Stellplatz des Regalsystems abgesenkt und das Teleskopsystem 20 wird nach einem Absenken wieder eingefahren.

Wie in Fig. 3 gezeigt, ist das Shuttlefahrzeug 10 mit einem einfachwirkenden Teleskopsystem 20 versehen, welches rechts oder links ausgefahren werden kann. Einfach wirkend bedeutet hierbei ausfahren in einer Ebene, um eine minimale Bauhöhe zu erreichen. Ebenso weist das erfindungsgemäße Shuttlefahrzeug 10 Antriebsmotoren 38-1, 38-2, 38-3, 38-4 in Zuordnung zu den Rädern 40-1, 40-2, 40-3, 40-4 des Fahrgestells 12 auf. Zudem vorgesehen sind ein Antriebsmotor für den Hubantrieb bei elektrischer Ausbildung des Hubsystems und ein Antriebsmotor für das Teleskopsystem 20.

Alternativ könnte die Fördertechnik aus mehreren Fördersträngen, z.B. vier Fördersträngen, bestehen, je nach Ladegut und Gewicht mit Kette Zahnriemen etc.

Zudem kann das Shuttlefahrzeug 10 mit einer Doppelgurtfördertechnik ausgestattet sein, für die dann ebenso ein Antriebsmotor vorgesehen ist. Bevorzugt ist vorgesehen, dass entlang der Längsseiten der Ladefläche 30 mindestens eines Teleskopsystems 20 jeweils zwei Fördergurte der Doppelgurtfördertechnik vorgesehen sind. Zudem sind weiter bevorzugt die Lauflächen der Doppelgurtfördertechnik relativ zu der Oberfläche der Ladefläche 30 des Teleskopsystems 20 gemäß einem vorgegeben Abstand größer Null beanstandet. Dieser Abstand kann beispielsweise einen Wert von 5mm bis 5cm aufweisen.

Für die Fördertechnik ist eine weitere Option der Einsatz von Kettenförderern, Zahnriemen bzw. Fördergurten.

Wie in Fig. 3 gezeigt, kann durch die Kombination eines Teleskopsystems 20 mit Hubantrieb in einfachwirkender Weise mit geringer Bauhöhe in einem Winkelregal eine beliebige Anzahl an Lagergut gelagert werden, wobei eine Begrenzung lediglich durch die Länge des Teleskopsystems 20 gegeben ist.

Ebenso weist das Shuttlefahrzeug 10 der vorliegenden Erfindung einen Controller auf. Bevorzugt, wird der Controller mittels einer Schnittstelle für drahtlose Kommunikation, z.B. WLAN, für den Bewegungsablauf und den Ladevorgang relevanten Daten versorgt, die von einem externen Steuersystem des Regalsystems zur Verfügung gestellt werden.

Für die Energieversorgung der elektrischen Verbraucher des Shuttlefahrzeugs 10 kann ein Energiespeicher beispielsweise in Kombination mit einer Kondensatorzwischenspeichertechnik vorgesehen sein. Alternativ kann eine Energieversorgung mittels einer Stromschiene entlang einer Fahrpassage des Shuttlefahrzeugs 10 erfolgen.

Gemäß der vorliegenden Erfindung kann das Shuttlefahrzeug 10 eine variable Anzahl von Teleskopsystemen 20 aufweisen, die unabhängig voneinander betrieben werden können.

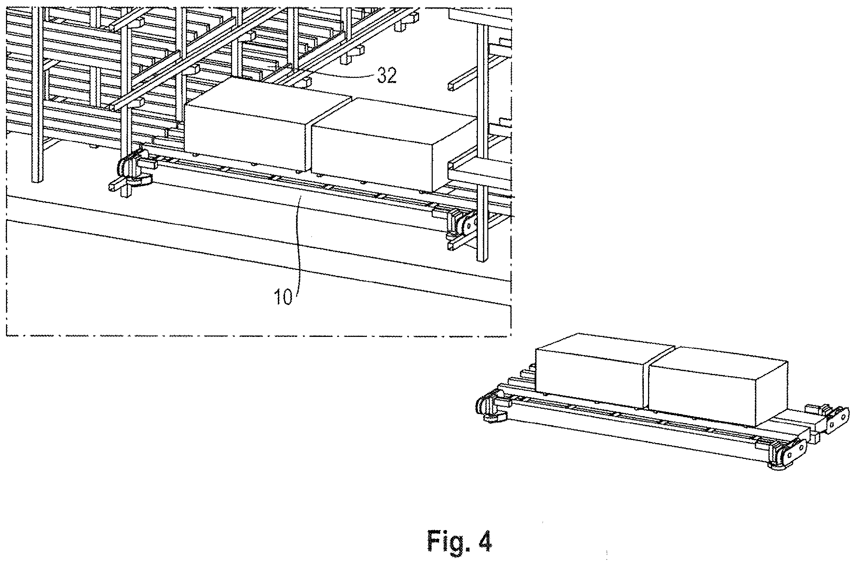

Fig. 4 zeigt den Einsatz des erfindungsgemäßen Shuttlefahrzeugs in einem erfindungsgemäßen Lagersystem.

Die Fig. 4 zeigt deutlicher die Positionierung des erfindungsgemäßen Shuttlesystems 10 relativ zu einer Lagerbox 32 des Regalsystems.

Wie in Fig. 4 gezeigt, fährt das Shuttlefahrzeug 10 die Lagerbox 32 so an, dass es zu einer wechselseitigen Ausrichtung der Fahrschienen 18-1, 18-2 des Shuttlefahrzeugs 10 mit den zugeordneten Fahrschienen der Lagerbox 32 erfolgt. Sobald diese Ausrichtung erreicht ist, stoppt das Shuttlefahrzeug 10 und das Teleskopsystem 20 kann in die Lagerbox 32 einfahren. Hierbei ist eine mehrfach tiefe Lagerung, in Fig. 4 eine zweifach tiefe Lagerung, lediglich durch die Länge des Teleskopsystems 20 begrenzt. Zudem lässt sich im Rahmen der vorliegenden Erfindung die Schwerlastvariante realisieren, da die Last und die hieraus resultierenden Kräfte über die Schienen der Lagerbox 32 direkt in das Lagersystem eingeleitet werden können, ohne dass zusätzliche Kräfte auf das Shuttlefahrzeug 10 wirken.

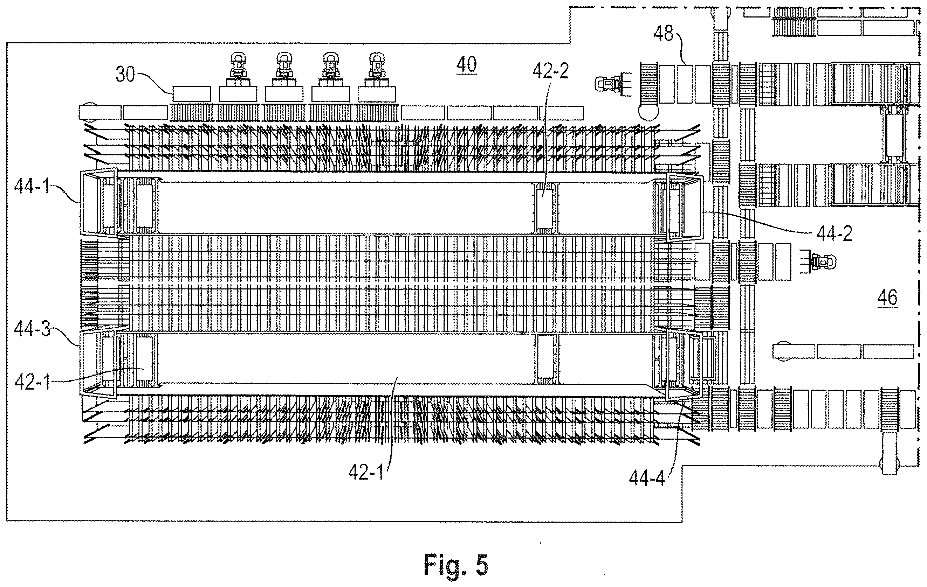

Die Fig. 5 zeigt eine Draufsicht auf ein erfindungsgemäßes Regalsystem, das zusammen mit mindestens einem Shuttlefahrzeug 10 gemäß der vorliegenden Erfindung betrieben wird.

Wie in Fig. 5 gezeigt, enthält das Regalsystem 40 mindestens eine Lagerebene, in der eine Vielzahl von Lagerboxen rechtwinklig angeordnet sind.

Wie in Fig. 5 gezeigt, enthält das Regalsystem 40 mindestens eine zischen gegenüberliegenden Außenseiten des Regalsystems 40 geradlinig verlaufende Shuttlepassage 42-1, 42-2 pro Lagerebene, die sich entlang der Lagerboxen jeder Lagerebene erstrecken.

Zudem enthält das Regalsystem 40 gemäß der vorliegenden Erfindung mindestens ein Shuttlefahrzeug 10, wie gemäß Fig. 1 bis Fig. 3 beschrieben. Das Shuttlefahrzeug 10 lässt sich in der mindestens einen Shuttlepassage 42-1, 42-2 des Lagersystems 40 bewegen, um Lagergüter mittels der erfindungsgemäßen Teleskoptechnik ein- und auszulagern.

Ferner sind erfindungsgemäß die Lagerboxen an deren Unterseite mit Teleskopfahrschienen versehen, so dass im Schwerlastfall bei ausgefahrenem Teleskopsystem 20 des Shuttlefahrzeugs 10 Teleskopräder 22-1, 22-2, 22-3, 22-4 auf diesen Teleskopfahrschieben aufliegen. Zudem können in jeder Shuttlepassage 42-1, 42-2 Stromschienen vorgesehen sein, um das Shuttlefahrzeug 10 mit Energie zu versorgen.

Wie in Fig. 5 gezeigt, ist an den Außenseiten des Regalsystems 40 mindestens ein Umsetz- bzw. system 44-1, 44-2, 44-3, 44-4 vorgesehen, um ein Shuttlefahrzeug 10 und/oder Lagergüter in der Höhe gegenüber den einzelnen Lagerebenen des Regalsystems 40 umzusetzen.

Wie in Fig. 5 gezeigt, bedient ein Umsetzsystem 44-1, 44-2, 44-3, 44-4 eine Vorzone 46 des Regalsystems 40. Gegenüber dem Liftsystem ist hierbei eine zuführende und eine abführende Fördertechnik 48 angeordnet. Das Zu- bzw. Abführen kann hierbei in mehreren Ebenen erfolgen, wodurch sich mehrere ZU- und Abführungen einseitig, gegenüberliegen oder mehrseitig realisieren lassen.

Wie in Fig. 5 gezeigt, können entlang des Regalsystems 40 Durchlaufregale 50 angeordnet sein, die an ihrer oberen Seite mittels einem Shuttlefahrzeug 10 befüllbar sind und an deren Unterseite Lagergüter von einem Shuttlefahrzeug 10 übernommen werden können.

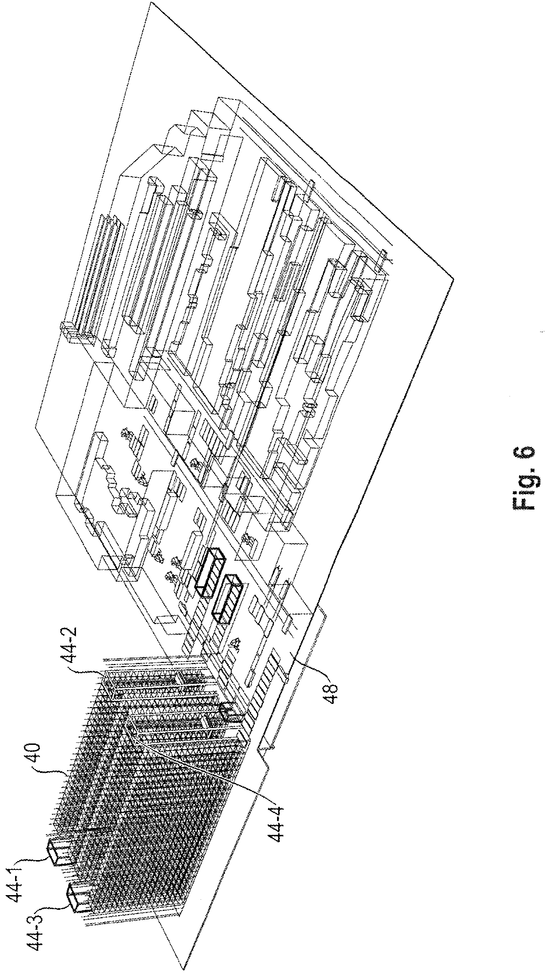

Die Fig. 6 zeigt eine perspektivische Ansicht des erfindungsgemäßen Regalsystems.

Wie in Fig. 6 gezeigt, sind Umsetzsysteme 44-1, 44-2, 44-3, 44-4 jeweils am Ende einer Shuttlepassage vorgesehen. Mit den Umsetzsystemen 44-1, 44-2, 44-3. 44-4 können Shuttlefahrzeuge 10 zwischen Ebenen des Regalsystems 40 bzw. zu der Vorzone 46 befördert werden. Erfindungsgemäß kann auch eine Kombination von Produktumsetzer und Shuttleumsetzer zur Anwendung kommen. Da entlang der Längsseite des Regalsystems 40 Durchlaufkanäle bestückt werden können ergibt sich ein Vorteil dahingehend, dass auch eine Möglichkeit der Kombination mit standardisierten Waren zu Personen-Kommissionier-Plätzen ermöglicht ist.

Ferner können erfindungsgemäß Shuttlefahrzeuge 10 inklusiv Lagergütern von den Umsetzsystemen 44-1, 44-2, 44-3, 44-4 umgesetzt werden. Es können mehrere Shuttlefahrzeuge 10 je Ebene des Regalsystems 40 zum Einsatz kommen. Auch eine Kombination von Produkt- und Shuttlefahrzeugumsetzung ist möglich.

In Hinblick auf das in Fig. 6 gezeigte Regalsystem 40 ergibt sich ein standardisierter Ablauf wie folgt:
Der Shuttleumsetzer bzw. das Liftsystem bringt das Shuttlefahrzeug 10 in die Vorzone 46. Dort nimmt das Shuttlefahrzeug 10 das zu lagernde Produkt auf. Das Liftsystem 44-2, 44-4 bringt das Shuttlefahrzeug 10 mit Produkt in die logistisch richtige Ebene, wo das Shuttlefahrzeug 10 in die Ebene einfährt und anschließend das zu lagernde Produkt in der hierfür vorgesehenen Lagerbox einlagert. Umgekehrt kann beim Auslagern vorgegangen werden.

Durch das Bereitstellen mehrerer Liftsysteme kann eine wegoptimierte und ebenso redundante Vorgehensweise gewährleistet werden.

Wie in Fig. 6 gezeigt, besteht ein weiterer Vorteil der vorliegenden Erfindung in der Kombination der Lagerfunktion mit der Kommissionierfunktion direkt auf Basis des Regalsystems 40 und/oder einer separaten Anordnung am Regalsystem 40. Dadurch werden steigende Anforderungen im Umfeld von Industrie 4.0 Systemlösungen erfüllt, im Hinblick auf das Lagern, Zwischenpuffern, Kommissionieren und für eine optimale Lösung der übergeordneten Kommunikation mittels WLAN. Die erfindungsgemäße Shuttletechnologie zeichnet sich durch einen geringeren Energieverbrauch und durch eine sehr produktschonende Lösung aus.

Optional sind auch Ausbildungen des Shuttlefahrzeugs 10 mit und ohne Kettenförderer möglich, mittels denen Ladegüter auf die Ladefläche transportierbar sind.

Im Bereich der Vorzone 46 kann das Shuttlefahrzeug 10, nachdem der Lift dieses in die richtige Höhenposition befördert hat, das Lagergut auf einer Seite an die Fördertechnik 48 abgeben und auf der anderen Seite das Ladegut von der Fördertechnik 48 aufnehmen. Hierbei erfolgt die Abgabe und die Aufnahme mittels Teleskoptechnik oder nach Bedarf auch mittels am Shuttlefahrzeug 10 angeordneten Kettenförderers. Fördertechnikanbindungen können mehrfach übereinander oder einseitig ausgeführt sein. Auch Anbindungen an beiden Stirnseiten des Regals oder entlang dem Regalsystem 40 an der Position eines Stellplatzes für die Übergabe an ein Shuttlefahrzeug 10 sind möglich.

Erfindungsgemäß kann bei Anforderung mit einem sehr hohen Durchsatz an einer Seite des Regalsystems 40 ein Liftsystem bzw. mehrere Liftsysteme für das Umsetzen von Ladegut vorgesehen sein. In diesem Fall verbringen Shuttlefahrzeuge 10 in den jeweiligen Ebenen lediglich das Ladegut auf die definierte Übergabestation, vorzugsweise am Ende der Shuttlepassagen 42-1, 42-2.

Von dort werden dann mittels als Ladegutumsetzer ausgebildeten Liftsystemen die Behälter, Produkte, etc. in die Vorzone 46 mit der zu- und abfördernden Fördertechnik 48 gebracht.

Auch ein Umsetzen der Shuttlefahrzeuge 10 von einer Shuttlepassage zu einer anderen Shuttlepassage in horizontaler Richtung ist im Rahmen der vorliegenden Erfindung möglich, sowohl bei der Schwerlastvariante als auch bei der Niedriglastvariante.

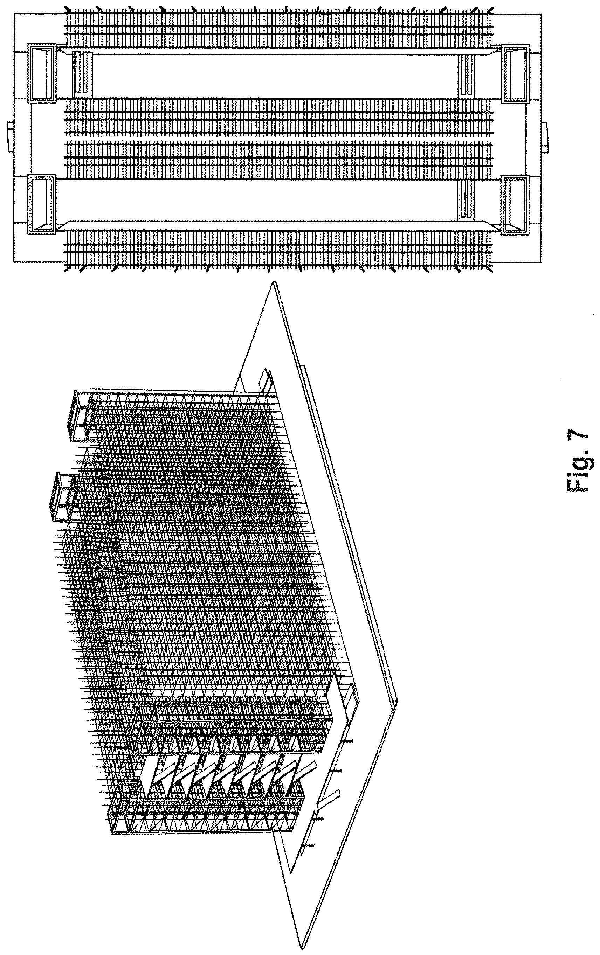

Fig. 7 zeigt eine Perspektivansicht des erfindungsgemäßen Lagersystems mit Kommissionier-Durchlaufregalen.

Wie in Fig. 7 gezeigt, können erfindungsgemäß ein oder mehrere Kommissionier-Durchlaufregale mit dem Regalsystem 40 kombiniert sein. Hierdurch ergibt sich eine besonders vorteilhafte Lager- und Materialflusstechnische Steuerung des Gesamtsystems. Ebenso kann abhängig von den Durchsatzanforderungen die Anzahl der im Rahmen des Regalsystems eingesetzten Shuttlefahrzeuge 10 variabel bestimmt werden.

Sofern entlang des Regalsystems 40 für das Kommissionieren oder für den Antransport und Abtransport von Ladegut Kommissionier-Durchlaufregale bzw. Durchlaufregale angeordnet sind, werden diese an der oberen Seite, d.h. der Gassenseite, vom Shuttlefahrzeug 10 befüllt. An der unteren Seite können Produkte von den Behältern oder Gebinden oder direkt entnommen werden. Leere Ladungsträger können über eine zur Shuttlepassage fallende Durchlaufregalstrecke zurückgeführt werden. Am unteren Ende wird in diesem Fall wiederum vom Shuttlefahrzeug 10 mittels der Teleskopunterfahrtechnik das Ladegut übernommen. So kann auch Ladegut von einem Regalsystem zu einem anderen transportiert werden, optional auch mittels angetriebener Fördertechnik. Wenn die Schnittstelle zum Shuttlefahrzeug 10 mittels einer angetriebenen Fördertechnik ausgeführt ist, kann mittels einer Doppelgurtfördertechnik am Shuttlefahrzeug 10 übernommen werden.

Für das Kommissionieren werden die Durchlaufregale beispielsweise mit Anzeigesystemen wie "pick-by-light" oder "pick-by-voice" versehen. Zudem ist eine vollautomatische Kommissionierung mittels Robotertechnik möglich.

Insgesamt ermöglicht die vorliegende Erfindung den Einsatz eines sehr niedrig einfach wirkenden Unterfahrteleskops durch welches in Kombination mit einem Regalsystem 40 mehrfach tiefe Lagerungen ermöglicht sind. In weiterer Folge kann ein Durchlaufregal mittels Teleskopsystem 20 in der Befüllung und der Entnahme aktiv bedient werden. Im Ergebnis erzieht die vorliegende Erfindung eine mehrfachtiefe Lagerung durch das Teleskopsystem 20, welches über ein Hubsystem am Shuttlefahrzeug 10 gehoben und gesenkt werden kann.

## Patentansprüche

1. Shuttlefahrzeug (10) zum Transportieren von Lagergütern in einem Regalsystem, enthaltend:
ein Fahrgestell (12) mit hieran montierten Rädern (14-1, ···, 14-4), um das das Shuttlefahrzeug entlang von Fahrschienen (16-1, 16-2) des Regalsystems zu bewegen;
mindestens eine Teleskopfahrschiene (18-1, 18-2), die an dem Fahrgestell (12) so montiert ist, dass ihre Fahrrichtung gegenüber der derjenigen der Fahrschienen (16-1, 16-2) des Regalsystems um einen Winkel von im Wesentlichen 90° abweicht;
wobei mindestens ein Teleskopsystem (20) mit hieran montierten Teleskoprädern (22-1, ..., 22-4) vorgesehen ist , um das Teleskopsystem (20) entlang der mindestens einen Teleskopfahrschiene (18-1, 18-2) relativ zu dem Fahrgestell (12) in einer Ebene ein- und auszufahren mit:
einem Basisträgerelement (26), an dem die Teleskopräder (22-1, ..., 22-4) mittels Radaufhängungen (28-1, 28-2, 28-3) befestigt sind;
**dadurch gekennzeichnet, dass**
das Teleskopsystem ein Hubsystem aufweist, um eine Ladefläche (30) des Teleskopsystems (20) höhenverstellbar an dem Basisträgersystem (26) zu befestigen.

2. Shuttlefahrzeug nach Anspruch 1, **dadurch gekennzeichnet, dass** das Hubsystem mehrere an dem Basisträgerelement (26) und an der Ladefläche (30) befestigte Scherenverstrebungen (34) und mehrere Hubsäulen zum Positionieren der Ladefläche (30) relativ zu dem Basisträgerelement (26) aufweist.

3. Shuttlefahrzeug nach Anspruch 1 oder 2, **dadurch gekennzeichnet, dass** das Hubsystem ein mechanisches, ein elektrisches und/oder ein hydraulisches Hubsystem ist.

4. Shuttlefahrzeug nach einem der Ansprüche 1 bis 3, **dadurch gekennzeichnet, dass** es mindestens einen Antrieb (38-1, ..., 38-4) für das Shuttlefahrzeug und mindestens einen Antrieb für das Hubsystem aufweist.

5. Shuttlefahrzeug nach einem der Ansprüche 1 bis 4, **dadurch gekennzeichnet, dass** es mindestens einen Antriebsmotor zum Ausfahren des Teleskopsystems (20) aufweist, der an dem Shuttlefahrzeug (10) oder dem Teleskopsystem (20) montiert ist.

6. Shuttlefahrzeug nach einem der Ansprüche 1 bis 5, **dadurch gekennzeichnet, dass** es einen Controller enthält, der eine Schnittstelle für eine drahtlose Kommunikation aufweist, um eine Datenkommunikation mit einem externen Steuerungssystem durchzuführen.

7. Shuttlefahrzeug nach einem der Ansprüche 1 bis 6, **dadurch gekennzeichnet, dass** es einen Energiespeicher oder einen Schleifkontakt aufweist.

8. Regalsystem, enthaltend:
mindestens eine Lagerebene, in der eine Vielzahl von Lagerplätzen rechtwinklig angeordnet sind;
mindestens eine zwischen gegenüberliegenden Außenseiten des Regalsystems geradlinig verlaufende Shuttlepassage pro Lagerebene, die entlang von Lagerplätzen dieser Lagerebene verläuft; und
ein Shuttlefahrzeug nach einem der Ansprüche 1 bis 7, das sich in mindestens einer Shuttlepassage des Lagersystems zum Einlagern und Auslagern von Lagergütern bewegen lässt.

9. Regalsystem nach Anspruch 8, **dadurch gekennzeichnet, dass** bei mindestens einem Lagerplatz unterseitige Teleskopfahrschienen so vorgesehen sind, dass bei ausgefahrenem Teleskopsystem (20) des Shuttlefahrzeugs (10) Teleskopräder (22-1, ..., 22-4) des Teleskopsystems (20) auf den Teleskopfahrschienen aufliegen.

10. Regalsystem nach Anspruch 8 oder 9, **dadurch gekennzeichnet, dass** entlang jeder Shuttlepassage Stromschienen vorgesehen sind, um das Shuttlefahrzeug (10) mit Energie zu versorgen.

11. Regalsystem nach einem der Ansprüche 8 bis 10, **dadurch gekennzeichnet, dass** es an einer Außenseite des Regalsystems (40) mindestens ein Umsetzsystem aufweist, um ein Shuttlefahrzeug (20) und/oder Lagergüter in der Höhe umzusetzen.

12. Regalsystem nach einem der Ansprüche 8 bis 11, **dadurch gekennzeichnet, dass** entlang des Regalsystems Durchlaufregale (50) angeordnet sind, die an ihrer oberen Seite mittels einem Shuttlefahrzeug (10) befüllbar sind und an deren Unterseite Ladegüter von einem Shuttlefahrzeug (10) übernommen werden können.

## Claims

1. Shuttle vehicle (10) for transporting stored goods in a shelving system, containing:
a chassis (12) having wheels (14-1, ..., 14-4) mounted thereon in order to move the shuttle vehicle along guide rails (16-1, 16-2) of the shelving system;
at least one telescopic guide rail (18-1, 18-2) which is mounted on the chassis (12) in such a way that its travel direction deviates by an angle of substantially 90° relative to those of the guide rails (16-1, 16-2) of the shelving system;
wherein at least one telescopic system (20) is provided with telescopic wheels (22-1, ..., 22-4) mounted thereon in order to extend and retract the telescopic system (20) in a plane relative to the chassis (12) along the at least one telescopic guide rail (18-1, 18-2) having:
a base support element (26) to which the telescopic wheels (22-1, ..., 22-4) are fastened by means of wheel suspensions (28-1, 28-2, 28-3);
**characterised in that** the telescopic system comprises a lifting system in order to fasten a loading surface (30) of the telescopic system (20) to the base support element (26) in a height-adjustable manner.

2. Shuttle vehicle according to claim 1, **characterised in that** the lifting system comprises a plurality of scissor struts (34) that are fastened to the base support element (26) and to the loading surface (30) and a plurality of lifting columns for positioning the loading surface (30) relative to the base support element (26).

3. Shuttle vehicle according to claim 1 or 2, **characterised in that** the lifting system is a mechanical, electric and/or hydraulic lifting system.

4. Shuttle vehicle according to any of claims 1 to 3, **characterised in that** it comprises at least one drive (38-1, ... , 38-4) for the shuttle vehicle and at least one drive for the lifting system.

5. Shuttle vehicle according to any of claims 1 to 4, **characterised in that** it comprises at least one drive motor for extending the telescopic system (20) and which is mounted on the shuttle vehicle (10) or telescopic system (20).

6. Shuttle vehicle according to any of claims 1 to 5, **characterised in that** it contains a controller which comprises an interface for wireless communication in order to carry out data communication with an external control system.

7. Shuttle vehicle according to any of claims 1 to 6, **characterised in that** it comprises an energy accumulator or a sliding contact.

8. Shelving system, containing:
at least one storage plane in which a large number of storage spaces are arranged at a right angle;
at least one shuttle passage per storage plane that extends in a straight line between opposing outer faces of the shelving system and that extends along storage spaces of said storage plane; and
a shuttle vehicle according to any of claims 1 to 7 which can be moved in at least one shuttle passage of the storage system for storing and retrieving stored goods.

9. Shelving system according to claim 8, **characterised in that**, at at least one storage space, telescopic guide rails are provided on the lower side such that, when the telescopic system (20) of the shuttle vehicle (10) is extended, telescopic wheels (22-1, ... , 22-4) of the telescopic system (20) lie on the telescopic guide rails.

10. Shelving system according to claim 8 or 9, **characterised in that** busbars are provided along each shuttle passage in order to supply the shuttle vehicle (10) with energy.

11. Shelving system according to any of claims 8 to 10, **characterised in that** it comprises at least one transfer system on an outer face of the shelving system (40) in order to vertically transfer a shuttle vehicle (20) and/or stored goods.

12. Shelving system according to any of claims 8 to 11, **characterised in that** flow racks (50) are arranged along the shelving system, which flow racks can be filled at the upper side thereof by means of a shuttle vehicle (10) and stored goods can be taken at the lower side thereof by a shuttle vehicle (10).

## Revendications

1. Véhicule navette (10) pour le transport de marchandises stockées dans un système de rayonnage, contenant :
un châssis (12) sur lequel sont montées des roues (14-1,...,14-4), pour déplacer le véhicule navette le long de rails de roulement (16-1, 16-2) du système de rayonnage ; au moins un rail de roulement télescopique (18-1, 18-2) qui est monté sur le châssis (12) de sorte que son sens de déplacement diffère de celui des rails de roulement (16-1, 16-2) du système de rayonnage d'un angle de sensiblement 90° ;
dans lequel au moins un système télescopique (20) est prévu, avec des roues télescopiques (22-1,...,22-4) montées sur lui, pour rentrer et sortir le système télescopique (20) le long dudit au moins un rail de roulement télescopique (18-1, 18-2) par rapport au châssis (12) dans un plan avec :
un élément de support de base (26) sur lequel les roues télescopiques (22-1,..., 22-4) sont fixées au moyen de suspensions de roue (28-1, 28-2, 28-3) ; **caractérisé en ce que** le système télescopique présente un système de levage pour fixer une surface de chargement (30) du système télescopique (20) de manière réglable en hauteur au système de support de base (26).

2. Véhicule navette selon la revendication 1, **caractérisé en ce que** le système de levage présente plusieurs entretoises à ciseaux (34) fixées à l'élément de support de base (26) et à la surface de chargement (30) et plusieurs colonnes de levage pour positionner la surface de chargement (30) par rapport à l'élément de support de base (26).

3. Véhicule navette selon la revendication 1 ou la revendication 2, **caractérisé en ce que** le système de levage est un système de levage mécanique, électrique et/ou hydraulique.

4. Véhicule navette selon l'une quelconque des revendications 1 à 3, **caractérisé en ce qu'**il présente au moins un entraînement (38-1,..., 38-4) pour le véhicule navette et au moins un entraînement pour le système de levage.

5. Véhicule navette selon l'une quelconque des revendications 1 à 4,
**caractérisé en ce qu'**il présente au moins un moteur d'entraînement pour sortir le système télescopique (20) qui est monté sur le véhicule navette (10) ou le système télescopique (20).

6. Véhicule navette selon l'une quelconque des revendications 1 à 5,
**caractérisé en ce qu'**il comprend un contrôleur qui présente une interface pour une communication sans fil afin d'effectuer une communication de données avec un système de commande externe.

7. Véhicule navette selon l'une quelconque des revendications 1 à 6,
**caractérisé en ce qu'**il présente un accumulateur d'énergie ou un contact frottant.

8. Système de rayonnage, comprenant :
au moins un niveau de stockage dans lequel une pluralité d'emplacements de stockage sont disposés à angle droit ;
au moins un passage de navette s'étendant de manière linéaire par niveau de stockage entre les faces extérieures opposées du système de rayonnages, qui s'étend le long d'emplacements de stockage de ce niveau de stockage ; et
un véhicule navette selon l'une quelconque des revendications 1 à 7,
qui est apte à être déplacé dans au moins un passage de navette du système de stockage pour la mise en stock de marchandises stockées et l'extraction de marchandises hors du stock.

9. Système de rayonnage selon la revendication 8,
**caractérisé en ce**
**que** pour au moins un emplacement de stockage, des rails de roulement télescopiques côté inférieur sont prévus de sorte que, lorsque le système télescopique (20) du véhicule navette (10) est sorti, les roues télescopiques (22-1,..., 22-4) du système télescopique (20) reposent sur les rails de roulement télescopiques.

10. Système de rayonnage selon la revendication 8 ou la revendication 9, **caractérisé en ce que** des rails conducteurs sont prévus le long de chaque passage de navette pour alimenter en énergie le véhicule navette (10).

11. Système de rayonnage selon l'une quelconque des revendications 8 à 10, **caractérisé en ce qu'**il présente sur une face extérieure du système de rayonnage (40) au moins un système de transfert pour transférer en hauteur un véhicule navette (20) et/ou des marchandises stockées.

12. Système de rayonnage selon l'une quelconque des revendications 8 à 11, **caractérisé en ce que** des rayonnages dynamiques (50) sont disposés le long du système de rayonnage, qui peuvent être remplis sur leur face supérieure au moyen d'un véhicule navette (10) et peuvent recevoir des marchandises stockées d'un véhicule navette (10) sur leur face inférieure.
